# EUROPÄISCHE PATENTSCHRIFT

(11) **EP 3 061 725 B1**
(45) Veröffentlichungstag und Bekanntmachung des Hinweises auf die Patenterteilung: **20.06.2018**
(21) Anmeldenummer: 16000366.1
(22) Anmeldetag: 15.02.2016
(51) Int. Cl.: C01B 25/00, B01D 11/02, B01D 21/01, B01J 3/00, B09B 3/00, C01B 25/28, C01B 25/32

(54) **VERFAHREN ZUR ABTRENNUNG VON PHOSPHOR AUS BIOMASSE**
METHOD FOR THE SEPARATION OF PHOSPHOROUS FROM BIOMASS
PROCÉDÉ DE SÉPARATION DU PHOSPHORE DE LA BIOMASSE

(30) Priorität: 26.02.2015 DE 102015002416
(43) Veröffentlichungstag der Anmeldung: 31.08.2016
(73) Patentinhaber: TerraNova Energy GmbH, 40231 Düsseldorf (DE)
(72) Erfinder: Buttmann, Marc, 40235 Düsseldorf (DE); Yalcin, Erkan, 60487 Frankfurt (DE); Schneider, Claudia, 55777 Fohren-Linden (DE); Decker, Andreas, 40489 Düsseldorf (DE)
(74) Vertreter: Rössler, Matthias

(56) Entgegenhaltungen:
- EP-A1- 2 602 013
- EP-A2- 2 716 619
- CH-A5- 697 083
- DE-A1- 10 206 347
- JP-A- 2002 086 099
- JP-A- 2009 035 441
- JP-A- 2009 242 202
- JP-A- 2009 285 636
- Anonymous: "AVA cleanphos Wirtschaftliche Phosphor-Rückgewinnung mit Hydrothermaler Carbonisierung", , 1. September 2014 (2014-09-01), XP055278186, i-net Cleantech Technology Event Gefunden im Internet: URL:http://www.i-net.ch/wp-content/uploads /2014/06/10_Thomas-Kläusli_AVA-CO2-Präsent ation-i-net-Cleantech-Technology-Event-201 4.pdf [gefunden am 2016-06-06]
- Brussels: "European Sustainable Phosphorus Platform Special edition", , 1. Oktober 2014 (2014-10-01), XP055278178, Gefunden im Internet: URL:http://www.phosphorusplatform.eu/image s/download/ScopeNewsletter108.pdf [gefunden am 2016-06-06]

## Beschreibung

### Einleitung

Die vorliegende Erfindung betrifft ein Verfahren zur Abtrennung von Phosphor aus Biomasse, insbesondere Klärschlamm, indem dieser durch hydrothermale Karbonisierung vorbehandelt, anschließend im pH-Wert abgesenkt wird, sodass nach einer Fest-Flüssigtrennung ein großer Teil des Phosphors in die Flüssigphase übergegangen ist und dann abgetrennt werden kann. Weiterer Gegenstand dieser Erfindung ist eine Vorrichtung, insbesondere zur Durchführung des vorgenannten Verfahrens.

### Stand der Technik

Unter **Biomasse** im Sinne der vorliegenden Erfindung versteht man eine Zusammensetzung wie z.B. Bioabfall, land-, forst- und gartenwirtschaftliche Reststoffe, Reststoffe aus der Behandlung von kommunalem und industriellen Abwasser insbesondere Klärschlämme, gewerbliche und industrielle Abfälle des Futtermittel- und Lebensmittelbereichs, aber auch tierische Nebenprodukte und Abfallstoffe, beispielsweise Knochen, Horn, Tiermehl oder Schlachtabfälle. Tierische Abfallstoffe können zwischen 2 bis 12 % P in der Trockenmasse, pflanzliche 0,4 - 1 % P in der Trockenmasse und Klärschlämme bis zu 15 % P in der Trockenmasse aufweisen, bei mittleren Werten von 1,5 bis 7 % P. Biomasse in Form von Klärschlamm ist ein wasserreiches Abfallprodukt aus der Abwasserreinigung und enthält, bezogen auf die darin enthaltene Trockensubstanz, zwischen 1% und 6% Phosphor.

Da die natürlichen Phosphorvorkommen begrenzt sind und der bergmännische Abbau des Phosphatgesteins zunehmend aufwändig und umweltschädigend wird, sind Rückgewinnungstechnologien entwickelt worden, um den Phosphorkreislauf zu schließen. Klärschlamm ist dafür als Ausgangsstoff besonders geeignet, da er kontinuierlich an Punktquellen, nämlich in Kläranlagen, in vergleichsweise großen Mengen anfällt - alleine in Deutschland sind darin jährlich etwa 60.000 t Phosphor enthalten.

Ein Überblick zum Stand der Technik der Phosphorrückgewinnung aus Klärschlamm verschafft der Abschlußbericht des vom BMBF geförderten Projekts "Phosphorrecycling - Ökologische und wirtschaftliche Bewertung verschiedener Verfahren und Entwicklung eines strategischen Verwertungskonzepts für Deutschland" vom Institut für Siedlungswasserwirtschaft der RW TH Aachen, 11.2011 online unter http://www.phosphorrecycling.de/- index.php?option=com rokdownloads&view=file&Itemid=67&id=73&lang=de, besucht 9/2/16 oder Meyer, C, Steinmetz, H, Phosphorrückgewinnung aus Klärschlämmen kommunaler Kläranlagen, in: Thome-Kozmiensky, K. J., Beckmann, M. Energie aus Abfall, Bd. 10, 2013 online bei http://www.vivis.de/phocadownload/2013 eaa/2013 EaA 1015 1038 Meyer.pdf besucht 9/2/16.

Die darin aufgeführten Technologien beruhen im Grundsatz zumeist darauf, dass der im Klärschlamm enthaltene Phosphor durch Zugabe von Säure aus dem Feststoff gelöst wird, in die Flüssigphase übergeht und anschließend durch Fest-Flüssigtrennung separiert wird. Der Klärschlamm wird dabei je nach Verfahrensansatz unterschiedlich vorbehandelt, beispielsweise durch Entwässerung oder Verbrennung.

Aus DE102008026991 ist bekannt, dass während der hydrothermalen Karbonisierung (HTC) von Klärschlamm bei pH Werten von 4 oder niedriger Phosphor in die flüssige Phase des HTC Produkts zurückgelöst wird. Dem Fachmann ist bekannt, dass die Rücklösung von Phosphor vom pH-Wert in dem Sinne abhängig ist, dass eine Absenkung des pH-Werts eine Erhöhung der Rücklösung bewirkt.

Hydrothermale Karbonisierung (HTC) bezeichnet dabei eine Behandlung des Klärschlamms unter Luftabschluß bei Temperaturen zwischen 100 °C und 300 °C. Dies wird bspw. durch die DE102007062808A1, DE102007062809A1, DE102007062810A1, DE102007062811A1, DE102007056170A1, DE102008058444A1 beschrieben.

Die voreingereichte, nachveröffentlichte DE102014112108B3 betrifft ein Rückgewinnungsverfahren von in Abwässern gelöstem Phosphor, wo im Anschluss an die hydrothermale Karbonisierung das Reaktionsprodukt gemäß kennzeichnendem Teil des Hauptanspruch wenigstens 2 Filtrationsschritten unterzogen wird, um die Phosphorbestandteile aus dem Kohleschlamm abzutrennen "der Slurry *vorzugsweise vorgefiltert* und der daraus entstehende Filterkuchen mit Schwefelsäure angesäuert wird, wobei die Schwefelsäure mit den Metallsalzen zu Phosphorsäure und Metallsulfaten reagiert, die Biokohle in einem *ersten Filtrationsschritt* von dem Eluat aus der entstandenen Phosphorsäure mit den darin gelösten Metallsulfaten und schließlich in einem *zweiten Filtrationsschritt* die Phosphorsäure von den darin gelösten Metallsulfaten getrennt wird. **Die o.g. Vorfiltrierung als essentieller Schritt zieht sich wie ein roter Faden durch die Beschreibung unter [0016:** konkreter, **0017** - **0018] und Ansprüche 2 und 3].** Die beanspruchte Erfindung erreicht dies unter Einsparung von wenigstens einem Filtrationsschritt mit nur 1 (filtrierenden) Fest-Flüssig-Trennung und ist somit nicht nur neu, sondern spart für den Fachmann, nach Lesen des Standes der Technik unvorhersehbar Verfahrenschritte und die damit zusammenhängenden Vorrichtungen bei verkürzter Herstelldauer des Wertstoffs, geringerem Platzbedarf, Wartung und Installation bei der Vorrichtung, Einsparung von Energien.

EP2602013A1 betrifft ein Verfahren zur Rückgewinnung von Phosphorverbindungen aus Klärschlammaschen, welches eine energetisch technisch aufwendige Vorbehandlung des Klärschlamms mittels Verbrennung erfordert [0013 - 0016, 0021, 0022, 0024, 0030, 0031, 0033, 0034 - 0037, 0039, Anspruch 1, 2, 10, 13]. Die beanspruchte Erfindung erreicht dies unter Einsparung der Vorbehandlung durch Verbrennung und ist somit nicht nur neu, sondern spart für den Fachmann, nach Lesen des Standes der Technik unvorhersehbar auch Verfahrenschritte und die damit zusammenhängenden Vorrichtungen bei verkürzter Herstelldauer des Wertstoffs, geringerem Platzbedarf, Wartung und Installation bei der Vorrichtung, Einsparung von Energien.

WO2013/187955A1 betrifft gemäß Hauptanspruch ein Verfahren zur Rückgewinnung von Phosphorverbindungen aus Klärschlamm durch hydrothermale Karbonisierung einer Klärschlammsuspension zu einer Biokohlesuspension, welches gemäß den Merkmalen wenigstens 2 Isolations-= Filtrationsschritte aufweist, nämlich, "*Isolierung* der Biokohle aus der wässrigen Suspension, Behandlung wenigstens eines Teils der isolierten Biokohle mit einer wässrigen Säure unter Bedingungen, die geeignet sind, ein wässriges Phosphatmaterial bereitzustellen und Isolieren der säurebehandelten Biokohle aus dem wässrigen Phosphatmaterial", vgl. die Definition auf Seite 5, Z. 5 - 13, Isolierung der Biokohle (z.B. Filtration, Zentrifugation und deren Kombination). Die beanspruchte Erfindung erreicht dies unter Einsparung von wenigstens einem Filtrationsschritt mit nur 1 (filtrierenden) Fest-Flüssig-Trennung und ist somit nicht nur neu, sondern spart für den Fachmann, nach Lesen des Standes der Technik unvorhersehbar Verfahrenschritte und die damit zusammenhängenden Vorrichtungen bei verkürzter Herstelldauer des Wertstoffs, geringerem Platzbedarf, Wartung und Installation bei der Vorrichtung, Einsparung von Energien.

**Die** JP 2009-035441 A **und** JP 2009-242202 A **betreffen jeweils ein Verfahren zur Gewinnung von Phosphor aus einer Biomasse. Dabei umfasst das Verfahren zumindest die folgenden Schritte: Vorbehandlung der Biomasse bei 100-250 °C bei 0,1 bis 4 MPa (HTC-Verfahren); Weiterbehandlung des so erzeugten Kohleschlamms mit überkritischem Wasser (mehr als 374 °C und mindestens 22,1 MPa), wobei danach eine Asche als Reaktionsprodukt vorliegt. Die so produzierte Asche wird mit Chlor versetzt, gefiltert und zur Gewinnung des Phosphors weiterbehandelt.**

### 1. Aufgabe

Der Erfindung liegt zum einen die Aufgabe zugrunde, ein weiteres Verfahren zur Abscheidung von Phosphorbestandteilen aus Biomasse zur Verfügung zu stellen, welches zunächst einer hydrothermalen Karbonisierung, dann einer Säurebehandlung und schließlich einer Phosphoreliminierung unterzogen wird.

### Lösung

Diese Aufgabe wird erfindungsgemäß durch die kennzeichnenden Merkmale von Anspruch 1 gelöst.

Die Erfindung betrifft somit ein Verfahren zur Abtrennung von Phosphor aus Biomasse, insbesondere aus Klärschlamm, wobei zunächst eine hydrothermale Karbonisierung durchgeführt wird, dann der entstandene Kohleschlamm ohne eine vorausgehende Fest-Flüssigtrennung im pH-Wert auf ein saures Niveau abgesenkt wird, anschließend nur eine Fest-Flüssigtrennung zur Abscheidung der Flüssigphase vorgenommen wird und schließlich die Flüssigphase einer Phosphoreliminierung unterzogen wird.

### Vorteile

Als vorteilhaft erweist sich die im Verfahren beschriebene Erfindung insbesondere in folgenden Punkten:
- Die Phosphorrückgewinnung kann als Erweiterung einer bestehenden HTC Anlage ergänzt werden. Dadurch werden aufwändige Investitionen in die notwendige Vorbehandlung des Klärschlamms vermieden.
- Die Vorrichtung zur Durchführung des Verfahrens ist technisch sehr einfach mit wenigen Komponenten aufgebaut und kostengünstig.
- Der Verbrauch an Mineralsäure, insbesondere Schwefelsäure ist im Vergleich zu anderen bekannten markterprobten Verfahren geringer, s. Vergleichsversuche unten.
- Die Rückgewinnungsquote für Phosphor ist im Vergleich zu anderen markterprobten Verfahren höher.
- Der Phosphor liegt wassergelöst in der Flüssigphase vor und ist damit sehr gut pflanzenverfügbar.
- Durch die erfindungsgemäße Behandlung des Klärschlamms wird eine sehr gute Entwässerungsleistung von 60-75% Trockensubstanzgehalt erreicht und damit die zu entsorgende Menge im Volumen minimiert.

Die Effizienz der Phosphorrückgewinnungstechnologien wird dabei wesentlich durch den Verbrauch an Säure einerseits und der Rückgewinnungsquote, also dem Quotienten aus der Menge des wiedergewonnenen Phosphors und der Gesamtmenge Phosphor im Klärschlamm, andererseits bestimmt, s. Tabelle weiter unten.

Nach einer bevorzugen Ausführungsform des erfindungsgemäßen Verfahrens wird die Fest-Flüssigtrennung der sauer eingestellten Kohleschlammsuspension durch Filtrieren vorgenommen, vorzugsweise mittels einer Oberflächenfiltration oder durch Zentrifugieren, insbesondere durch Kammerfilterpressen.

Die **Fest-Flüssigtrennung** im Sinne der vorliegenden Erfindung geschieht in an sich bekannter Weise durch Filtrieren oder Zentrifugieren. Die Filtration kann diskontinuierlich z.B. mittels Autopress, Drucknutschen, Rührdrucknutschen oder Saugnutschen, Tellerfilter, (Druck)Blattfilter, Beutelfilter, Kerzenfilter, Schlauchfilter, Schichtenfilter, Filterpressen, wie z.B. Rahmenfilterpressen, Kammerfilterpressen, Membranfilterpressen; Plattenfilter, Schüttungsfilter oder kontinuierlich z.B. mittels Crossflow-Filtration, Scherspaltfilter, Tubular-Rotorfilter, Bandfilter, Druckdrehfilter, Trommelfilter, Vakuumdrehfilter, Scheibendruckfilter, Schiebbandpresse erfolgen. Das Zentrifugieren kann kontinuierlich durch z.B. Siebzentrifugen, Siebschneckenzentrifungen, Prallringzentrifungen, Gleitzentrifugen, Schubzentrifugen, Schwingzentrifungen, Taumelzentrifugen oder Vollmantelzentrifugen oder diskontinuierlich z.B. durch Hängependelzentrifugen, Horizontalschälzentrifungen, Stülpfilterzentrifungen, Schubbeutelzentrifungen oder Vertikalzentrifugen erfolgen. Bevorzugt ist es, die Fest-Flüssigtrennung mittels Filterpressen durchzuführen.

Nach einer weiteren bevorzugen Ausführungsform des erfindungsgemäßen Verfahrens wird der pH-Wert auf Werte unterhalb pH 4, insbesondere unterhalb pH 3 und besonders geeignet unterhalb pH 2,5 abgesenkt. Dies geschieht in an sich bekannter Weise durch den Zusatz von Mineralsäure, wie z.B. Schwefelsäure, Salpetersäure oder Salzsäure, bevorzugt durch verdünnte bis konzentrierte Schwefelsäure und Messung des pH-Wertes.

Nach einer weiteren bevorzugen Ausführungsform des erfindungsgemäßen Verfahrens wird der Kohleschlamm vor der pH-Wert Absenkung durch Trennung auf gravimetrischem Wege mittels Schwerkraft auf einen Feststoffgehalt zwischen 1 Gew-% und 40 Gew-%, insbesondere zwischen 1 Gew-% und 30 Gew-% eingestellt.

Unter **Eindickung,** auch als Trennung auf thermischem Wege bezeichnet, versteht man ein Verdampfen des wässrigen Bestandteils der Flüssigphase bzw. der kohleschlammhaltigen Suspension entweder durch Anlegen eines Vakuums oder durch Aufheizen oberhalb des Siedepunktes jeweils durch Destillation. Bevorzugt ist hier das Aufheizen des wasserhaltigen Medium oberhalb des Siedepunkt beispielsweise mittels Heizflüssigkeit und (teilweise) Abscheidung des Wassers durch Destillation bis zum gewünschten Feststoffgehalt.

Nach einer weiteren bevorzugen Ausführungsform des erfindungsgemäßen Verfahrens wird die abgeschiedene phosphorhaltige Flüssigphase durch Trennung auf thermischem Wege wenigstens überwiegend, vorzugsweise vollständig vom Wasser befreit, insbesondere durch Verdampfen. Hierdurch können, je nach Wunsch, entweder wässrige Konzentrate der phosphorhaltigen Zusammensetzungen (Phosphatflüssigdünger) oder phosphorhaltige Feststoffe (Phosphat) erhalten werden.

Nach einer weiteren bevorzugen Ausführungsform des erfindungsgemäßen Verfahrens wird die abgeschiedene Flüssigphase durch Trennung auf thermischem Wege vollständig durch Verdampfen vom Wasser befreit wird und der Trocknungsrückstand vorzugsweise in an sich bekannter Weise granuliert.

Die Granulierung im Sinne der vorliegenden Erfindung geschieht in an sich bekannter Weise einerseits durch Kompression z.B. durch Kompaktiermaschinen oder Brikettiermaschinen. Andererseits durch Extrusion mittels Lochpressen.

Nach einer bevorzugten Ausführungsform der vorliegenden Erfindung wird die abgeschiedene Flüssigphase einer Fällungsreaktion unterzogen wird, wobei die Fällungsreaktion mittels löslicher Metallsalze eines Elements der Gruppen I B, II B, IV B bis VIII B der Übergangsmetalle (CAS), löslicher Zinn-, Blei-, Antimon-, Wismutverbindungen oder mittels Erdalkalisalzen, bevorzugt mittels löslicher Salze des Gruppe VIII B elements Eisen- oder Aluminiumsalze oder als Kristallisation mittels löslicher Magnesiumsalze mit Ammoniumverbindungen oder mittels Calciumsalzen erfolgt.

Die Abtrennung der gelösten Phosphorbestandteile in Form von Phosphaten aus dem Filtrat erfolgt in an sich bekannter Weise mittels **Fällung** löslicher Metallsalze eines Elements der Gruppen I B (Kupfer, Silber, Gold), II B (Zink, Kadmium, Quecksilber), IV B (Titan, Zirkonium, Hafnium), V B (Vanadin, Niob, Tantal), VI B (Chrom, Molybdän, Wolfram), VII B (Mangan, Technetium, Rhenium) und VIII B (Eisen, Kobalt, Nickel, Ruthenium, Rhodium, Palladium, Osmium, Iridium, Platin) der Übergangsmetalle (CAS), löslicher Bor-, Aluminium-, Gallium-, Indium-, Zinn-, Blei-, Antimon-, Wismutverbindungen oder mittels Erdalkalisalzen wie Magnesium, Calcium, Strontium oder Barium. Bevorzugt ist es aber, die Fällung durch lösliche Calcium-, Magnesium-, Aluminium- oder Eisensalze durchzuführen. Beispiele für diese Salze sind Eisen-(III)-chlorid, Eisen-(II)-chlorid, Eisen-(III)-sulfat, Eisen-(II)-sulfat, Eisen-(III)-chloridsulfat, Aluminiumsulfat, Aluminiumchlorid, Aluminium-Eisen-(III)-chlorid, Natriumaluminate, Polyaluminium-(hydroxid)-chlorid, Polyaluminium-(hydroxid)-chloridsulfat, in fester oder wassergelöster Form. Bei Einsatz von gelöstem Calciumhydroxid oder von Magnesiumchlorid bei basisch eingestelltem pH-Wert in Gegenwart von Ammonium als Fällmittel kommt es zur Bildung von kristallinen Fällungsprodukten. Bei Kontakt der gelösten Phosphorbestandteile mit Calcium-Silicat-Hydrat (*CSH*)-Substraten entstehen CalciumPhosphat Verbindungen in granularer Form.

Nach einer bevorzugten Ausführungsform der vorliegenden Erfindung wird die Fällungsreaktion in Form der Kristallisation als MAP Kristallisation mittels löslicher Magnesiumsalze oder Magnesiumoxid und Ammoniumverbindungen, als Calciumphosphatkristallfällung mittels Calziumverbindungen oder durch Absorption an Calcium-Silikat-Hydroxid erfolgten. Unter Ammoniumverbindungen versteht man sowohl Ammoniumsalze wie auch Ammoniumhydroxid. Die Magnesium-Ammonium-Phosphat Fällung (MAP-Fällung) ist in der Natur als Struvit-Kristallisation bekannt, die in der Natur als kristalliner Bestandteil ehemaliger Tierexkremente oder als unerwünschte kristalline Aussscheidung in Faulbehältern in Kläranlagen erfolgt.

### 2. Aufgabe

Der vorliegenden Erfindung liegt weiter die Aufgabe zugrunde, eine erfindungsgemäße Vorrichtung bereitzustellen, die insbesondere zur Durchführung des vorbeschriebenen Verfahren geeignet ist.

### Lösung

Die erfindungsgemäße Vorrichtung kommt, anders als Vorrichtungen im Stand der Technik mit nur 1 (filtrierenden) Fest-Flüssig-Trennungsvorrichtung bei der Abtrennung der phosphorhaltigen Lösung aus der Kohlesuspension aus.

### Vorteile

Dies führt bei der erfindungsgemäßen Vorrichtung zu einem geringerem Platzbedarf, geringeren Wartungs-, Stand-, und Installationszeiten bei der Vorrichtung und der Einsparung von thermischer und elektrischer Energien.

Gegenstand der Erfindung ist somit auch einen Vorrichtung, insbesondere zur Durchführung des Verfahrens der vorbeschriebenen Art, umfassend ein druckbeaufschlagtes Reaktionsvolumen zur Durchführung der hydrothermalen Karbonisierung 1 bzw. 10, ein Reaktionsgefäß mit Rührwerk und Säurezufuhr 2, 3 bzw. 13,14 in direkter Verbindung mit 1 bzw. 10 oder mit einer Einrichtung zur gravimetrischen Eindickung 11, eine Fest-Flüssig-Trenneinrichtung 4 bzw. 15, ein Behältnis zur Phosphoreliminierung durch Abscheidung mittels Fällung / Kristallisation 7 bzw. durch Wasserverdampfung 17, einen Auslass für den phosphorhaltigen Feststoff 8 / das phosphorhaltige wässrige Konzentrat 19, ggf. unter Weiterverarbeitung durch Entwässerung und / oder Trocknung und / oder Granulierung, einen Auslass für Kohle 5 bzw. 16.

Nach einer bevorzugen Ausführungsform der vorliegenden Erfindung beinhaltet die Vorrichtung Elemente, bei denen die Phosphoreliminierung entweder durch eine Fällung, insbesondere Kristallisation 7 oder durch eine wenigstens überwiegende Abtrennung auf thermischen Wege der wäßrigen Phase unter Erhalt eines phosphorhaltigen wässrigen Konzentrats, bevorzugt einer vollständigen Abtrennung auf thermischen Wege der wässrigen Phase 17 unter Erhalt eines phosphorhaltigen Feststoffs, ggf unter Weiterverarbeitung als Granulat, aufweist.

Die vorliegende Erfindung wird nachfolgend zunächst weiter durch Ausführungsbeispiele in Form von Herstellungsbeispielen und anhand von Literaturdaten von Vergleichsbeispielen großtechnischer deutscher Phosphorrückgewinnungsverfahren näher erläutert.

In Laborversuchen wurde nun untersucht, an welcher Stelle des Prozesses die pH Absenkung am effektivsten ist. Dazu wurden zwei verschiedene Szenarien gegenüber einem Standardverfahren untersucht.

### Beispiel 1 (Standardverfahren):

Es wurde eine hydrothermale Karbonisierung von 1800 g nicht ausgefaultem Klärschlamm mit einer Trockensubstanz (TS) von 21,1% durchgeführt. Der Klärschlamm enthielt 4,36% Phosphor (P) bezogen auf die Trockensubstanz oder 9,24 g P/kg Klärschlamm. Dazu wurden zum Klärschlamm 37,8 g 48%ige Schwefelsäure (H₂SO₄) pro kg Klärschlamm hinzugegeben, sodass ein pH-Wert von pH 3,93 erreicht wurde. Dieses Gemisch wurde 2,5 Stunden bei 185°C unter Luftabschluss in einem Rührbehälter karbonisiert. Nach der Entwässerung des entstandenen Kohleschlamms wurde eine Konzentration von 905 mg/l P im Filtrat gemessen. Dies entspricht etwa einer Transferrate von 11,98% des Phosphors vom Feststoff in die Flüssigphase.

### Beispiel 2 (Erniedrigung des pH-Wertes vor der Hydrothermalen Karbonisierung)

Zur Erhöhung der Konzentration an Phosphor im Filtrat wurde zunächst die zum Klärschlamm zugegebene Menge H₂SO₄ in 48%iger Konzentration auf 70,6 g pro kg Klärschlamm erhöht. Dadurch konnte der pH-Wert des Klärschlamm-Säure Gemischs vor der hydrothermalen Karbonisierung auf 2,74 erniedrigt werden. Dieses Gemisch wurde entsprechend den Bedingungen des Standardverfahrens karbonisiert. Nach der Entwässerung des entstandenen Kohleschlamms wurde eine Konzentration von 1.035 mg/l P im Filtrat gemessen. Dies entspricht einer Transferrate von 19,42% des Phosphors vom Feststoff in die Flüssigphase.

### Beispiel 3 (Durchführung des Standardverfahrens und anschließende Erniedrigung des pH-Wertes des entstandenen Kohleschlamms)

Hierbei wurde nun zunächst das Standardverfahren gemäß Beispiel 1 durchgeführt. Zu dem entstandenen Kohleschlamm wurde anschließend genau die Menge H₂SO₄ in 48%iger Konzentration zugegeben, die für das Verfahren 2 gegenüber Verfahren 1 zusätzlich notwendig gewesen war, d.h. 32 g H₂SO₄ pro kg Klärschlamm. Dadurch war der Säureverbrauch beider Verfahren identisch und die erzielten Rücklösungen des Phosphors in die Flüssigphase vergleichbar. Nach der Entwässerung des nachträglich angesäuerten Kohleschlamms wurde überraschenderweise eine sehr hohe Konzentration von 2.990 mg/l P im Filtrat gemessen. Dies entspricht einer Transferrate von 43,35% des Phosphors in die Flüssigphase.

### Beispiel 4: Großtechnisch mit Fällung des Phosphorbestandteile als MAP

Nach den Laborversuchen gemäß Beispiel 1 bis 3 wurde das Verfahren in einer großtechnischen Anlage zur Karbonisierung von Klärschlamm durchgeführt. Klärschlamm wurde dafür kontinuierlich über einen Wärmetauscher in einen luftdichten Rührreaktor mit 1.000 l Volumen unter Zugabe von 40 kg H₂SO₄ (98%ig) pro Tonne Klärschlamm zugeführt und über einen weiteren Wärmetauscher wieder abgeführt. Dadurch wurde eine mittlere Aufenthaltsdauer von 2,5 h bei einer Temperatur von 180 °C im Reaktor erzielt. Durch Variation des Füllstands im Rührreaktor oder der Durchflußgeschwindigkeit ist die mittlere Aufenthaltsdauer zwischen 1 h und 10 h einstellbar. Nach einer Abkühlung des entstandenen Kohleschlamms auf 70°C wurden H₂SO₄ in 98%iger Konzentration zugegeben. Die Menge wurde mit 30 kg H₂SO₄ pro Tonne Klärschlamm Input berechnet. Dadurch wurde der pH-Wert des Kohleschlamms von 4,8 auf 2,9 abgesenkt. Die Suspension wurde in einem Behälter mit Rührwerk für 30 min durchmischt. In einer anschließenden Entwässerung in einer Kammerfilterpresse wurde das Filtrat abgetrennt und eine Phosphorkonzentration von 3.420 mg/l festgestellt. Damit konnten 58% des Phosphors vom Klärschlamm in die Flüssigphase rückgelöst werden. In einer anschließenden MAP Fällung mittels durch Zugabe von 4g/l Magnesiumoxid und Natronlauge zur Anhebung des pH-Werts auf pH 9 wurden aus dem Filtrat 98% des darin enthaltenen Phosphors kristallisiert und über eine Fest-Flüssigtrennung in einer Kammerfilterpresse zurückgewonnen.

### Phoxnan Verfahren (Stand der Technik):

Der Abschlussbericht Phosphatrecycling, a.a.O., beschreibt auf Seite 167f, Abbildung 6.1 den Verfahrensablauf des Phoxnan Verfahrens. Dieser sieht nach der üblichen Ansäuerung mit H₂SO₄ und den abschließenden Fällungsreaktionen eine Zwischenbehandlung durch Niederdruck-Nassoxidation bei ca. 200 °C ("Loprox-Prozess") sowie eine anschließende Ultrafiltration und Nanofiltration vor. Dies sind im Vergleich zu den anderen diskutierten Verfahren zusätzliche Verfahrensschritte, die zudem noch technisch aufwändig sind. Daher ist der Verfahrenaufwand des Phoxnan Verfahrens vom Fachmann im Vergleich zu den anderen in u.g. Tabelle aufgeführten Verfahren als sehr hoch zu beschreiben. Zur Rückgewinnung von 31.739 kg P pro Jahr ist It. Seite 170 Tabelle 6.6 306 Mg Schwefelsäure 96% eingesetzt worden, womit sich ein spezifischer Verbrauch von etwa 9,64 g H₂SO₄ (96%) / g Prück oder 9,45 g H₂SO₄ (98%) / g Prück berechnet. Die Rückgewinnungsquote wird mit auf Seite 169 mit 51% angegeben.

### Seaborn Verfahren (Stand der Technik):

Esemen, T., Großtechnische Nährstoffrückgewinnung aus Faulschlamm, Korrespondenz Abwasser, Abfall 2012 (59) Nr. 10, 934 - 941, erläutert auf Seite 936 in Abbildung 3 den Tagesverbrauch von 508 kg H₂SO₄ 96 % zur Rücklösung von 30 kg P, was einer Rücklösequote von 37,4 % entspricht. Daraus berechnet sich der spezifische Bedarf an H₂SO₄ 98 % von 16,6 g H₂SO₄ 98 % / g Prück. Das Seaborn-Verfahren verwertet It. Abbildung 3 Klärschlamm mit 1,83 % TR (Trockenrückstand = Trockensubstanzgehalt TS). Durch den damit einhergehenden, sehr hohen Wassergehalt von über 98 % werden somit mehr als 10-fach größere Durchsatzmenge behandelt als im TerraNova Verfahren, in dem Klärschlamm mit 21 % TS behandelt wird. Somit ist die benötigte Anlagentechnik 10-fach größer und der Verfahrensaufwand ist als hoch im Vergleich zum erfindungsgemäßen Verfahren zu bezeichnen.

### Stuttgarter Verfahren (Stand der Technik):

Das Stuttgarter Verfahren verwendet It. Mayer, Steinmetz, a.a.O., S. 1032, Bild 6, ebenso wie das Seaborn Verfahren nassen Klärschlamm, womit die vergleichbare Durchsatzmengen zu behandeln sind und das Verfahren aufgrund der großen Durchsatzmengen ebenso als hoch zu bezeichnen ist. Mohn, R-E, MAP-Recycling auf der Kläranlage Offenburg, 2013 online bei https://www.umweltbundesamt.de/sites/default/files/medien/378/dokumente/map-recycling- auf der klaeranlage offenburg, besucht 9/2/16, beschreibt ebenso auf Seite 15 einen Trockensubstanzgehalt von 3,5% für das Stuttgarter Verfahren. Mayer, Steinmetz, a.a.O., weist in Tabelle 6 auf Seite 1034 auf einen Verbrauch von 8,4 L H₂SO₄ 78% / kg Prück hin. Rückgerechnet auf 98% H₂SO₄ ergibt sich ein Verbrauch von 6,68 L H₂SO₄ 98% pro kg Prück. Mit einem spezifischen Gewicht von 1,83 kg/L http://www.internetchemie.info/chemiewiki/index. php?title=Schwefels%C3%A4ureDichtetabel le ergibt sich somit ein rechnerischer Verbrauch von 12,2 g H₂SO₄ 98% / g Prück. Mayer, Steinmetz, a.a.O., gibt die Rücklöserate auf Seite 1035 für das Stuttgarter Verfahren mit 39% an.

Die wesentliche Vorteilhaftigkeit des erfindungsgemäßen Verfahrens ist im Vergleich zu diesen 3 It. Abschlussbericht Phosphatrecycling, a.a.O., 2013, S. 331 f im größeren Maßstab in Deutschland umgesetzten Verfahren in folgender Tabelle dargestellt. Dabei wird die Menge der benötigten Schwefelsäure auf 1 g rückgewonnenes Phosphor (Prück) bezogen:

| Verfahren: | Phoxnan | Seaborn | Stuttgarter Verfahren | Erfindung Labor Beispiel 3 | Erfindung großtechnisch Beispiel 4 |
|---|---|---|---|---|---|
| Benötigte Säuremenge [g H₂SO₄(98%)/g Prück] | 9,45 | 16,6 | 12,2 | 8,41 | 6,53 |
| Rückgewinnungsquote | 51% | 37,4% | 39% | >43% | 58% |
| Verfahrensaufwand | sehr hoch | hoch | hoch | | mittel |

### Ausführungsbeispiele:

Die vorliegende Erfindung wird weiter durch Ausführungsbeispiel in Form von Vorrichtungen, die beispielsweise zur Durchführung des Verfahrens geeignet sind, erläutert.

Es zeigen:
Fig. 1 eine erste Ausführungsform der erfindungsgemäßen Vorrichtung,
Fig. 2 eine weitere Ausführungsform der erfindungsgemäßen Vorrichtung.

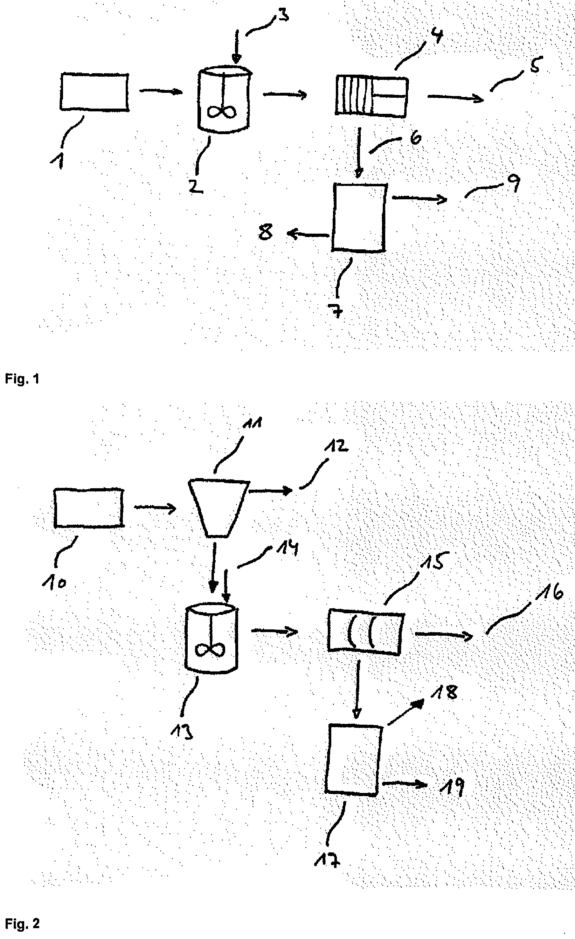

Fig. 1 zeigt eine erste Anlage zur hydrothermalen Karbonisierung 1, in der Klärschlamm zu einem Kohleschlamm verarbeitet wird. Anschließend wird dieser in einen Rührbehälter 2 gegeben und eine Säure, beispielsweise Schwefelsäure, bis zu einem pH-Wert von 2,9 zugegeben 3. Der angesäuerte Kohleschlamm wird anschließend in einer Kammerfilterpresse 4 entwässert, die entwässerte Kohle 5 zur energetischen Verwertung entnommen und das Filtrat 6 in einem weiteren Reaktionsbehälter 7 durch Zugabe von Magnesiumchloridlösung und festem Natriumhydroxid bzw. Natronlauge zur Säureneutralisation, Ammoniumverbindungen selbst sind im Klärschlamm ausreichend vorhanden, jeweils im molaren Überschuss, einer MAP Kristallisation unterzogen. Der zurückgewonnene Phosphor wird in Form von MAP Kristallen aus dem Behälter entnommen 8 und der abgereinigte Überstand dem Einlauf der Kläranlage oder dem Faulprozess der Kläranlage zugeführt 9. Der zurückgewonnene Phosphor wird anschließend mit dem Fachmann bekannten Verfahren zur weiteren Verwertung aufbereitet, beispielsweise durch Entwässerung, Trocknung oder Granulierung.

Fig. 2 zeigt eine weitere Anlage zur hydrothermalen Karbonisierung 10, in der Klärschlamm zu einem Kohleschlamm verarbeitet wird. In einem Absetzbehälter 11 wird der Kohleschlamm durch Schwerkraft gravimetrisch eingedickt und der Überstand 12 abgezogen. Der somit teilweise vom Wasser befreite Kohleschlamm wird anschließend in einen Rührbehälter 13 gegeben und Säure, beispielsweise Schwefelsäure, bis zu einem pH-Wert von 2,0 zugegeben 14. Nach einer Entwässerung in einer Zentrifuge 15 wird die Kohle 16 als Brennstoff verwertet und das Filtrat einer Verdampfungseinheit 17 zugeführt. Nach der Verdampfung des Wasseranteils 18 wird der kristalline Trockenrückstand 19 zur Düngemittelherstellung genutzt.

### Bezugszeichenliste:

1 Reaktor zur Durchführung der hydrothermalen Karbonisierung
2 Rührbehälter
3 Säureeinlass
4 Fest-Flüssigtrennung durch Filter z.B. Filterpresse
5 Kohle
6 wässriges Filtrat
7 Behälter mit Fällmitteleinlass zur kristallines Phosphatabscheidung
8 Phosphorhaltiger Feststoff
9 wässrige Phase nach Phosphorfällung
10 Reaktor zur Durchführung der hydrothermalen Karbonisierung
11 Absetzbecken
12 wässriger Überstand aus Kohleschlammabtrennung
13 Rührbehälter
14 Säureeinlass
15 Fest-Flüssigtrennung durch Zentrifuge
16 Kohle
17 Verdampfer
18 Wasser
19 Phosphorhaltiger Trockenrückstand

## Patentansprüche

1. Verfahren zur Abtrennung von Phosphor aus Biomasse, insbesondere aus Klärschlamm, wobei zunächst eine hydrothermale Karbonisierung, also eine Behandlung der Biomasse- unter Luftabschluss bei Temperaturen zwischen 100 °C und 300 °C, durchgeführt wird, dann der entstandene Kohleschlamm ohne eine vorausgehende Fest-Flüssigtrennung im pH-Wert abgesenkt wird, anschließend nur eine Fest-Flüssigtrennung zur Abscheidung der Flüssigphase vorgenommen wird und schließlich die Flüssigphase einer Phosphoreliminierung unterzogen wird.

2. Verfahren nach Anspruch 1, **dadurch gekennzeichnet, dass** die Fest-Flüssigtrennung durch Filtrieren vorgenommen wird, vorzugsweise mittels einer Oberflächenfiltration oder durch Zentrifugieren, insbesondere durch Kammerfilterpressen.

3. Verfahren nach Anspruch 1, **dadurch gekennzeichnet, dass** der pH-Wert auf Werte unterhalb pH 4, insbesondere unterhalb pH 3 und besonders geeignet unterhalb pH 2,5 abgesenkt wird.

4. Verfahren nach irgendeinem der vorgenannten Ansprüche, **dadurch gekennzeichnet, dass** der Kohleschlamm vor der pH-Wert Absenkung durch Trennung auf gravimetrischem Wege, wobei der Kohleschlamm durch Schwerkraft gravimetrisch eingedickt und der Überstand abgezogen wird, auf einen Feststoffgehalt zwischen 1 Gew-% und 40 Gew-%, insbesondere zwischen 1 Gew-% und 30 Gew-% eingestellt wird.

5. Verfahren nach irgendeinem der vorgenannten Ansprüche, **dadurch gekennzeichnet, dass** die abgeschiedene Flüssigphase durch Trennung auf thermischem Wege wenigstens überwiegend, vorzugsweise vollständig vom Wasser befreit wird, insbesondere durch Verdampfen.

6. Verfahren nach irgendeinem der vorgenannten Ansprüche, **dadurch gekennzeichnet, dass** die abgeschiedene Flüssigphase durch Trennung auf thermischem Wege vollständig durch Verdampfen vom Wasser befreit wird und der Trocknungsrückstand in an sich bekannter Weise granuliert wird.

7. Verfahren nach irgendeinem der vorgenannten Ansprüche, **dadurch gekennzeichnet, dass** die abgeschiedene Flüssigphase einer Fällungsreaktion unterzogen wird, wobei die Fällungsreaktion mittels löslicher Metallsalze eines Elements der Gruppen I B, II B, IV B bis VIII B der Übergangsmetalle, löslicher Zinn-, Blei-, Antimon-, Wismutverbindungen oder mittels Erdalkalisalzen, bevorzugt mittels löslicher Salze des Gruppe VIII B Elements Eisen oder durch Aluminiumsalze oder als Kristallisation mittels löslicher Magnesiumsalze mit Ammoniumverbindungen oder mittels Calciumsalzen erfolgt.

8. Verfahren nach irgendeinem der vorgenannten Ansprüche, **dadurch gekennzeichnet, dass** die Fällungsreaktion in Form der Kristallisation als Magnesium-Ammonium-Phosphat Kristallisation mittels löslicher Magnesiumsalze oder Magnesiumoxid und Ammoniumverbindungen oder als Calciumphosphatkristallfällung mittels Calziumverbindungen oder durch Adsorption an Calcium-Silikat-Hydroxid erfolgt.

## Claims

1. Process for removal of phosphorus from biomass, in particular from sewage sludge, wherein initially a hydrothermal carbonization, i.e. a treatment of the biomass in the absence of air at temperatures between 100°C and 300°C, is performed, then the pH of the resulting carbon slurry is reduced without a prior solid-liquid separation, subsequently only one solid-liquid separation for separation of the liquid phase is undertaken and finally the liquid phase is subjected to a phosphorus elimination.

2. Process according to claim 1, **characterized in that** the solid-liquid separation is undertaken by filtration, preferably by means of a surface filtration or by centrifuging, in particular by chamber filter pressing.

3. Process according to claim 1, **characterized in that** the pH is reduced to values below pH 4, in particular below pH 3 and particularly suitably below pH 2.5.

4. Process according to any of the preceding claims, **characterized in that** prior to the pH reduction by gravimetric separation means, wherein the carbon slurry is subjected to gravimetric thickening by gravity and the supernatant is withdrawn, the carbon slurry is brought to a solids content between 1 wt% and 40 wt%, in particular between 1 wt% and 30 wt%.

5. Process according to any of the preceding claims, **characterized in that** by thermal separation the separated liquid phase is at least predominantly, preferably completely, freed of water, in particular by evaporation.

6. Process according to any of the preceding claims, **characterized in that** by thermal separation the separated liquid phase is completely freed of water by evaporation and the residue from drying is granulated in a manner known per se.

7. Process according to any of the preceding claims, **characterized in that** the separated liquid phase is subjected to a precipitation reaction, wherein the precipitation reaction is performed using soluble metal salts of an element from groups I B, II B, IV B to VIII B of the transition metals, soluble tin, lead, antimony, bismuth compounds or using alkaline earth metal salts, preferably using soluble salts of the group VIII B element iron or via aluminium salts or as a crystallization using soluble magnesium salts with ammonium compounds or using calcium salts.

8. Process according to any of the preceding claims, **characterized in that** the precipitation reaction is performed in the form of a crystallization as a magnesium-ammonium-phosphate crystallization using soluble magnesium salts or magnesium oxide and ammonium compounds or as a calcium phosphate crystal precipitation using calcium compounds or by adsorption onto calcium silicate hydroxide.

## Revendications

1. Procédé de séparation de phosphore d'une biomasse, notamment d'une boue d'épuration, selon lequel une carbonisation hydrothermale, c'est-à-dire un traitement de la biomasse avec exclusion de l'air à des températures comprises entre 100 °C et 300 °C, est tout d'abord réalisée, puis le pH de la boue de charbon formée est réduit sans séparation solide-liquide préalable, et une séparation solide-liquide pour la séparation de la phase liquide n'est réalisée qu'ultérieurement, et enfin la phase liquide est soumise à une élimination du phosphore.

2. Procédé selon la revendication 1, **caractérisé en ce que** la séparation solide-liquide est réalisée par filtration, de préférence au moyen d'une filtration de surface ou par centrifugation, notamment par un filtre-presse à chambres.

3. Procédé selon la revendication 1, **caractérisé en ce que** le pH est réduit à des valeurs inférieures à pH 4, notamment inférieures à pH 3 et de manière particulièrement appropriée inférieures à pH 2,5.

4. Procédé selon l'une quelconque des revendications précédentes, **caractérisé en ce que** la boue de charbon est ajustée avant la réduction du pH par séparation par voie gravimétrique à une teneur en solides comprise entre 1 % en poids et 40 % en poids, notamment comprise entre 1 % en poids et 30 % en poids, la boue de charbon étant condensée gravimétriquement par la force de pesanteur et le surnageant étant soutiré.

5. Procédé selon l'une quelconque des revendications précédentes, **caractérisé en ce que** la phase liquide séparée est débarrassée de l'eau au moins en majorité, de préférence en totalité, par séparation par voie thermique, notamment par évaporation.

6. Procédé selon l'une quelconque des revendications précédentes, **caractérisé en ce que** la phase liquide séparée est débarrassée en totalité de l'eau par séparation par voie thermique par évaporation et le résidu de séchage est granulé d'une manière connue en soi.

7. Procédé selon l'une quelconque des revendications précédentes, **caractérisé en ce que** la phase liquide séparée est soumise à une réaction de précipitation, la réaction de précipitation ayant lieu au moyen de sels métalliques solubles d'un élément des groupes I B, Il B, IV B à VIII B des métaux de transition, de composés solubles d'étain, de plomb, d'antimoine, de bismuth, ou au moyen de sels alcalino-terreux, de préférence au moyen de sels solubles du groupe VIII B de l'élément fer ou par des sels d'aluminium ou sous la forme d'une cristallisation au moyen de sels de magnésium solubles avec des composés d'ammonium ou au moyen de sels de calcium.

8. Procédé selon l'une quelconque des revendications précédentes, **caractérisé en ce que** la réaction de précipitation a lieu sous la forme d'une cristallisation en tant que cristallisation magnésium-ammonium-phosphate au moyen de sels de magnésium solubles ou d'oxyde de magnésium et de composés d'ammonium ou sous la forme d'une précipitation de cristaux de phosphate de calcium au moyen de composés de calcium ou par adsorption sur du silicate-hydroxyde de calcium.
